# DEMANDE DE BREVET EUROPEEN

(11) **EP 1 128 596 A1**
(43) Date de publication de la demande: **29.08.2001**
(21) Numéro de dépôt: 00400762.1
(22) Date de dépôt: 20.03.2000
(51) Int. Cl.: H04L 9/00, H04L 12/14, H04L 29/06

(54) **Système client-serveur**

(30) Priorité: 22.02.2000 FR 0002182
(71) Demandeur: Europe Explorer, 69003 Lyon (FR)
(72) Inventeur: Bonhomme, Philippe Pierre Jacques, 34670 Saint-Bres (FR)
(74) Mandataire: Colas, Jean-Pierre

(57) **Abrégé**

Ce système de traitement de données client-serveur comprend un serveur (SE1, SE2, SE3, SE4) de données publiques et de données réservées, un terminal (T) client d'accès audit serveur, un premier réseau de communication bidirectionnelle (R1) pour l'accès du terminal aux données publiques (PU1, PU2, PU3, PU4) du serveur, un second réseau de communication bidirectionnelle (R2) pour l'accès du terminal aux données réservées (PR1, PR2, PR3, PR4) du serveur, et des moyens de gestion de l'accès du terminal au serveur via lesdits premier et second réseaux de communication. Les moyens de gestion comprennent un module d'accès aux données réservées du serveur, comportant des moyens de connexion automatique du terminal au serveur via le second réseau (R2) en réponse à une demande d'accès aux données réservées du serveur, des moyens de détection automatique de l'installation du module d'accès dans le terminal client (T) en réponse à la connexion du terminal au serveur via le premier réseau (R1), et des moyens de chargement automatique du module dans le terminal via le premier réseau (R1) en réponse à la détection d'une absence d'installation du module dans le terminal.

## Description

La présente invention concerne un système de traitement de données du type client-serveur.

Un réseau tel que l'Internet, et en particulier le World Wide Web, permet à un utilisateur doté d'un terminal équipé d'un logiciel de navigation d'accéder à des sites dotés d'une adresse et d'y obtenir des informations. D'un point de vue matériel, les informations ou données mises à la disposition par ces sites sont stockées dans un ou plusieurs serveurs. L'accès au réseau Internet est assuré par des fournisseurs de services au moyen d'une connexion à un réseau de télécommunication tel que le réseau téléphonique commuté (RTC), un réseau numérique à intégration de services (RNIS), un réseau câblé de télévision, ou autre.

Dans un tel système, les services fournis par le fournisseur d'accès Internet peuvent être gratuits ou payants et la connexion via le réseau régional est généralement payante selon un régime de forfait ou de taxation à la durée de connexion. Cependant, un tel payement ne concerne que l'accès proprement dit au réseau Internet, la consultation en ligne des différents sites et des données qu'ils contiennent demeurant, elle, gratuite.

Bien entendu, dans le cas du commerce électronique, le payement par carte de crédit ou porte-monnaie électronique permet à un utilisateur connecté à un site d'y acheter des produits physiques ou d'obtenir le téléchargement sur son terminal de dossiers ou fichiers. Outre qu'un tel mode de payement présente des risques en l'absence de mécanismes de sécurisation, il n'est pas adapté à la consultation d'informations en ligne car il suppose un payement préalable de cette information et son téléchargement sur le terminal. Or, un tel téléchargement est en général long et contraignant et, avec le temps, l'information téléchargée se trouve rapidement obsolète.

En raison de leur valeur marchande et/ou de leur caractère confidentiel, les éditeurs responsables de sites Internet ne mettent pas à la disposition des utilisateurs de nombreux contenus, c'est-à-dire de l'information dont ils disposent et qui serait susceptible d'être consultée.

L'invention vise à résoudre ce problème au moyen d'un système de traitement de données client-serveur permettant à un utilisateur doté d'un terminal d'accéder d'abord à des données publiques d'un site Internet, ou plus généralement d'un serveur, et d'accéder ensuite de manière particulièrement simple et transparente à des données réservées de ce site ou serveur.

A cet effet, l'invention a pour objet un système de traitement de données client-serveur comprenant au moins un serveur de données publiques et de données réservées, au moins un terminal client d'accès audit serveur, au moins un premier réseau de communication bidirectionnelle pour l'accès dudit terminal auxdites données publiques dudit serveur, au moins un second réseau de communication bidirectionnelle pour l'accès dudit terminal auxdites données réservées dudit serveur, et des moyens de gestion de l'accès dudit terminal audit serveur via lesdits premier et second réseaux de communication, caractérisé en ce que lesdits moyens de gestion comprennent :
- un module d'accès auxdites données réservées dudit serveur, ledit module comprenant des moyens de connexion automatique dudit terminal audit serveur via ledit second réseau en réponse à une demande d'accès aux données réservées dudit serveur,
- des moyens de détection de l'installation dudit module d'accès dans ledit terminal client en réponse à la connexion dudit terminal audit serveur via ledit premier réseau, et
- des moyens de chargement dudit module dans ledit terminal via ledit premier réseau en réponse à la détection d'une absence d'installation dudit module dans ledit terminal.

Le système suivant l'invention comporte en outre une ou plusieurs des caractéristiques suivantes considérées seules ou en combinaison :
- dans le cas où ledit terminal est connecté audit premier réseau par un modem, ledit module d'accès comprend des moyens de déconnexion pour déconnecter ledit terminal dudit premier réseau préalablement à sa connexion audit second réseau par lesdits moyens de connexion ;
- lesdits moyens de gestion comprennent des moyens de validation du chargement dudit module dans ledit terminal via ledit premier réseau et des moyens d'installation automatique dudit module d'accès dans ledit terminal en réponse à ladite validation ;
- lesdites données publiques dudit serveur comprennent des données d'identification dudit module d'accès auxdites données réservées et lesdits moyens de détection comprennent des moyens de lecture desdites données d'identification dans ledit serveur et des moyens pour rechercher la présence desdites données d'identification dans ledit terminal ;
- lesdites données publiques dudit serveur comprennent des données de localisation d'une entité contenant ledit module d'accès et lesdits moyens de chargement comprennent des moyens pour accéder à ladite entité via ledit premier réseau et pour charger dans le terminal ledit module d'accès à partir de ladite entité ;
- ledit système comprend des moyens de signature électronique dudit module d'accès chargé à partir de ladite entité et ledit terminal comprend des moyens de vérification de ladite signature ;
- lesdits moyens de connexion comprennent des moyens pour acquérir via ledit premier réseau des paramètres de connexion dudit terminal audit serveur via ledit second réseau ;
- lesdits moyens d'acquisition comprennent des moyens pour extraire une clé d'accès desdites données publiques dudit serveur, des moyens pour accéder via ledit premier réseau à un serveur contenant lesdits paramètres de connexion et des moyens pour charger, via ledit premier réseau, lesdits paramètres dans ledit terminal à partir dudit serveur de paramètres au moyen de ladite clé d'accès ;
- lesdits paramètres de connexion sont stockés sous forme chiffrée dans ledit serveur de paramètres et ledit module d'accès comprend des moyens de déchiffrage desdits paramètres ;
- ledit terminal comprend un modem piloté par lesdits moyens de connexion pour la connexion dudit terminal audit serveur de données via ledit second réseau ;
- ledit premier réseau est le réseau Internet et ledit module d'accès est un composant logiciel adapté pour s'intégrer à un logiciel de navigation sur Internet ; et
- ledit second réseau est un réseau surtaxé comprenant des moyens de taxation en fonction du temps de la connexion dudit terminal audit serveur.

D'autres caractéristiques et avantages de l'invention ressortiront de la description qui va suivre d'un mode de réalisation donné uniquement à titre d'exemple et illustré par les dessins annexés sur lesquels :
la figure 1 est un schéma de principe illustrant la configuration d'un système de traitement de données client-serveur suivant l'invention ;
la figure 2 est un algorithme illustrant le processus d'accès à la partie réservée d'un site ou serveur au moyen du système de la figure 1 ;
la figure 3 est un organigramme illustrant le processus de chargement d'un composant logiciel dans un terminal utilisateur ; et
la figure 4 est un schéma-bloc illustrant le processus par lequel le terminal d'un utilisateur accède aux paramètres de connexion d'un site exclusif.

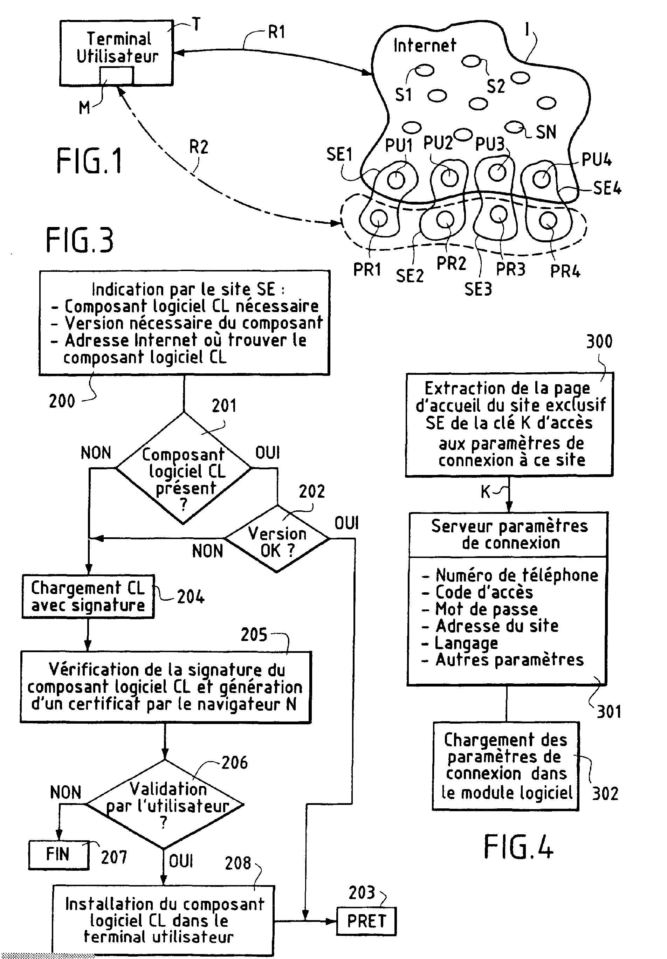

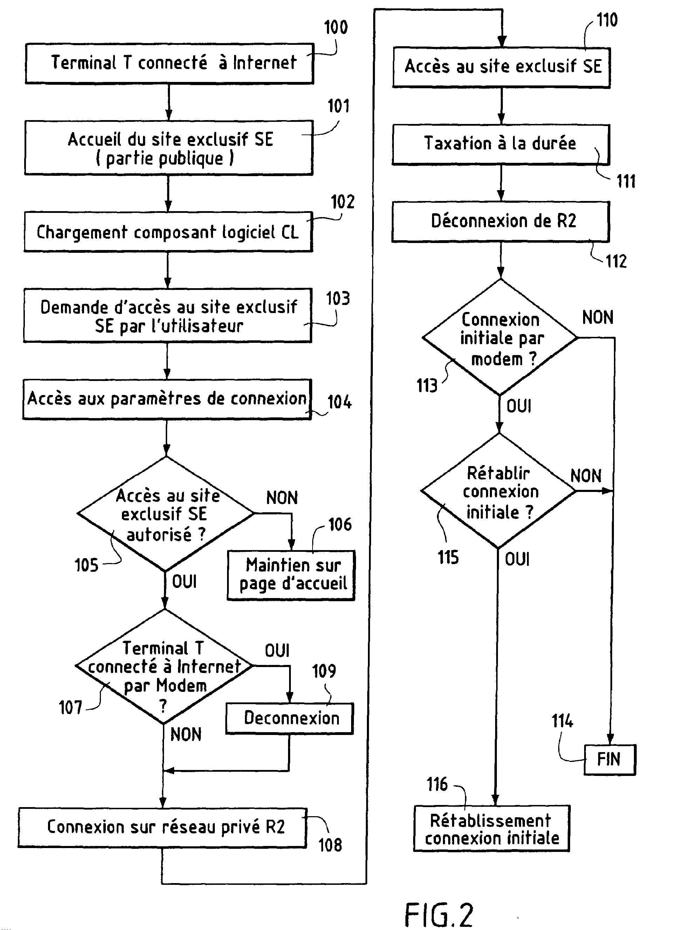

En se référant à la figure 1, la référence T désigne un terminal, tel que par exemple un ordinateur personnel (PC), permettant à un utilisateur de se connecter à l'ensemble du domaine Internet I via un premier réseau de communication bidirectionnelle R1. Le réseau R1 est un réseau public faisant appel, par exemple, au réseau téléphonique commuté (RTC), au réseau numérique à intégration de services (RNIS), à un réseau câblé de télévision, ou autre. Le terminal T permet à un utilisateur d'accéder à des sites publics S1, S2, .....Sn du domaine Internet.

Sur la figure 1 ont été représentés d'autres sites SE1, SE2, SE3 et SE4 ci-après appelés sites exclusifs. Ces sites exclusifs SE contiennent d'une part des données ou informations publiques PU1, PU2, PU3 et PU4 respectivement, qui font partie du domaine Internet, et d'autre part des données ou informations privées PR1, PR2, PR3 et PR4. Ces données privées PR1, PR2, PR3 et PR4 ne sont pas accessibles à travers Internet via le réseau public R1, mais par un réseau privé R2 tel qu'un réseau surtaxé permettant de facturer l'utilisateur du terminal T en fonction de la durée pendant laquelle celui-ci est connecté au site exclusif correspondant SE1, SE2, SE3, SE4.

En vue d'établir une liaison bidirectionnelle avec les sites exclusifs SE1, SE2, SE3, et SE4 via le réseau privé R2, le terminal 1 est doté d'un périphérique d'accès à ce réseau tel qu'un modem M. Le système de la figure 1 sera décrit plus en détail en se référant également aux figures 2 à 4.

Sur la figure 2, l'étape 100 correspond à une situation dans laquelle le terminal T est connecté au domaine de l'Internet I via le réseau public R1. Bien entendu, le terminal T est doté d'un logiciel d'exploration ou navigateur N lui permettant d'accéder aux différents sites publics S1,S2, .... Sn ainsi qu'aux données ou informations publiques PU1, PU2, PU3, PU4 des sites exclusifs SE1, SE2, SE3, SE4 respectivement. A l'étape 101, le terminal T se trouve en liaison avec la page d'accueil de l'un des sites exclusifs SE, page qui fait partie des données publiques PU de ce site.

Le bloc 102 représente le processus de chargement dans le terminal T d'un module d'accès aux données privées PR des sites exclusifs SE via le réseau privé R2. Ce module d'accès est constitué d'un composant logiciel (en anglais Plugin) CL destiné à venir s'intégrer dans le logiciel d'exploration N de ce terminal et en enrichir les fonctionnalités. Ce processus de chargement est illustré plus en détail sur la figure 3 à laquelle on se référera.

Comme cela ressort du bloc 200 de la figure 3, la page d'accueil du site exclusif SE contient des données d'identification du composant logiciel CL nécessaire pour accéder aux données privées PR de ce site, à savoir le nom et la version de ce logiciel. La page d'accueil du site SE contient également des données de localisation du composant logiciel CL, à savoir l'adresse Internet du site à partir duquel ce composant logiciel peut être téléchargé dans le terminal T. En 201, le logiciel d'exploration N détermine si le composant logiciel CL dont l'identité est indiquée par la page d'accueil du site SE est présent ou non dans le terminal T. Dans l'affirmative, le logiciel d'exploration N examine en 202 si la version du composant logiciel CL présent dans le terminal T est bien conforme à la version indiquée par la page d'accueil du site SE. Dans l'affirmative, le processus de chargement est terminé et, en 203, le terminal est prêt à la poursuite du processus d'accès aux données privées PR du site exclusif SE.

S'il s'avère à l'étape 201 que le composant logiciel CL n'est pas présent dans le terminal ou à l'étape 202 que la version du composant logiciel CL présent dans le terminal n'est pas celle indiquée par la page d'accueil du site SE, il est procédé en 204 par le logiciel d'exploration N au chargement de ce composant logiciel CL dans le terminal T à partir de l'adresse Internet indiquée dans la page d'accueil précitée. Le composant logiciel CL téléchargé est accompagné d'une signature électronique de la part de l'entité délivrant le composant logiciel.

En 205, le logiciel d'exploration N vérifie la signature électronique du composant logiciel par des moyens conventionnels, par exemple par déchiffrage de la signature au moyen de la clé publique associée à la clé privée ayant servi à la signature et comparaison d'un condensé du composant logiciel téléchargé avec le document signé au moyen de la clé privée. Si la vérification de la signature électronique est couronnée de succès, le logiciel d'exploration N émet un certificat qui est affiché sur l'écran du terminal T et garantit à l'utilisateur l'origine du composant logiciel téléchargé.

Il appartient ensuite à l'utilisateur, en 206, de valider ou non l'installation du composant logiciel CL au sein du logiciel d'exploration N. Cette validation peut être effectuée, par exemple, par un simple clic de l'utilisateur au moyen d'une souris sur un bouton prévu à cet effet dans la page d'accueil du site exclusif SE. Si l'utilisateur ne valide pas l'installation du composant logiciel CL, il est mis fin en 207 au processus de chargement de celui-ci et le processus d'accès aux données privées PR du site SE se trouve interrompu. Dans le cas contraire, il est procédé en 208 à l'auto-installation du composant logiciel CL dans le terminal T de l'utilisateur. Le composant logiciel est un modèle COM (Component Object Model), c'est-à-dire qu'il est indépendant du langage de programmation utilisé car il s'appuie sur des interfaces normalisées. Grâce à ces caractéristiques, l'installation du composant logiciel CL est automatique (auto-installation) et après celle-ci, le terminal est prêt en 203 pour la poursuite du processus d'accès aux données privées PR du site exclusif SE.

En revenant à la figure 2, la phase suivante 103 du processus consiste en la formulation par l'utilisateur du terminal T d'une demande d'accès aux données privées PR du site exclusif SE.

Le bloc suivant 104 représente le processus d'accès aux paramètres de connexion au site exclusif SE via le réseau privé R2. Le processus mis en oeuvre dans le bloc 104 est représenté plus en détail à la figure 4 à laquelle on se référera. En 300, le logiciel d'exploration N du terminal T extrait de la page d'accueil du site exclusif SE une clé K d'accès à ce site exclusif. Au moyen de cette clé d'accès K, le logiciel d'exploration N accède en 301 à des paramètres de connexion stockés dans un serveur de paramètres de connexion non représenté sur le dessin. Ces paramètres de connexion comprennent, par exemple, le numéro de téléphone du site SE via le réseau R2, un code d'accès à ce site, un mot de passe, l'adresse du site, la langue à utiliser pour l'affichage des informations, ainsi que d'autres paramètres. En 302, il est procédé par le logiciel de navigation N enrichi du composant logiciel CL au chargement de ces paramètres de connexion dans le composant logiciel CL installé dans le terminal T.

Ces paramètres de connexion sont stockés sous forme chiffrée dans le serveur de paramètres de connexion et transmises sous cette forme au composant logiciel CL qui comporte les fonctionnalités nécessaires pour procéder à leur déchiffrage. Ces mécanismes de contrôle de l'accès aux paramètres de connexion permettent:
- d'une part, d'interdire à un éditeur d'utiliser sans autorisation le composant logiciel CL pour offrir un accès à son ou ses sites exclusifs SE ; en effet, le composant logiciel CL est inutilisable sans les paramètres de connexion aux sites exclusifs SE ; et
- d'autre part, de contrôler les conditions dans lesquelles les éditeurs autorisés utilisent le composant logiciel CL pour donner un accès tarifé à un ou des sites exclusifs donnés.

Si, à la suite de la demande d'accès formulée par l'utilisateur en 103, le processus d'acquisition des paramètres de connexion s'est déroulé normalement en 104, l'accès aux données privées PR du site exclusif SE est autorisé en 105. Dans le cas contraire, le terminal T est maintenu sur la page d'accueil du site exclusif SE comme indiqué en 106.

En 107, le logiciel d'exploration N enrichi par le composant logiciel CL examine si le terminal T est connecté à Internet par modem. Dans la négative, il est procédé en 108 à une connexion sur le réseau privé R2 au moyen du modem M. Dans l'affirmative, le terminal est tout d'abord déconnecté d'Internet en 109, puis il est procédé en 108 à la connexion précitée sur le réseau privé R2.

A la suite de la connexion en 108 sur le réseau privé R2, qui fait appel aux paramètres de connexion obtenues comme indiqué en regard de la figure 4, le terminal T accède en 110 aux données privées PR du site exclusif SE. Les protocoles utilisés sont alors les mêmes que pour l'accès aux données publiques PU de ce site via le réseau R1 et Internet, et l'utilisateur peut continuer à utiliser son logiciel d'exploration N. Cependant, la barre d'outils de ce logiciel d'exploration N qui est affichée sur le terminal T est de préférence enrichie de boutons et/ou fenêtres propres à l'utilisation du composant logiciel CL et permettant à l'utilisateur de mettre en oeuvre l'ensemble des fonctionnalités voulues. Cet utilisateur peut ainsi consulter en ligne les données privées PR disponibles sur le site SE, cette consultation pouvant être taxée à la durée par l'opérateur du réseau R2 comme indiqué en 111. Du fait de la connexion directe établie entre le terminal T et le site exclusif SE via le réseau R2, cette taxation peut être modulée par l'opérateur du réseau R2 en fonction de conventions passées entre celui-ci et l'éditeur du site consulté.

Ce mode de connexion, par ailleurs transparent pour les utilisateurs, permet aux éditeurs de sites de mettre en ligne à la disposition de ceux-ci des informations ayant un caractère confidentiel grâce au caractère privé du réseau R2 et/ou des informations ou données ayant une valeur marchande grâce aux possibilités précitées de facturation en fonction de la durée.

Lorsque l'utilisateur a fini sa consultation de données privées PR sur le site exclusif SE, il se déconnecte en 112 du réseau privé R2, par exemple en cliquant au moyen d'une souris sur un bouton approprié affiché sur l'écran de son terminal T.

En 113, le logiciel d'exploration N enrichi du composant logiciel CL détermine si le terminal T était initialement connecté par modem à Internet. Dans la négative, il est mis fin au processus de consultation du site exclusif SE et, en 114, le terminal T se retrouve dans l'état initial qui précédait sa connexion via le réseau privé R2. Dans l'affirmative, il est demandé en 115 à l'utilisateur s'il souhaite rétablir la connexion initiale à Internet par modem. Dans la négative, le terminal T reste à l'état déconnecté, tandis que dans l'affirmative, il est procédé en 116 à un rétablissement de la connexion initiale à Internet via le réseau public R1.

Après déconnexion du terminal T, le composant logiciel CL demeure inséré dans le logiciel d'exploration N et les différents boutons qui sont venus enrichir la barre d'outils du logiciel d'exploration N sont conservés pour une utilisation ultérieure à l'occasion d'une nouvelle consultation en ligne des données privées PR d'un site exclusif SE dans les conditions décrites en regard de la figure 2.

Le système décrit ci-dessus permet à des professionnels de proposer, depuis leur site Web, à des utilisateurs d'accéder à des contenus en ligne présentant un caractère confidentiel et/ou une valeur marchande. II leur permet de vendre ce contenu en ligne selon un tarif fonction de la durée de consultation, comme sur le Minitel, ce qui jusqu'alors n'était pas possible sur Internet et limitait donc l'offre des services offerts.

Quant à l'utilisateur, il peut accéder rapidement, facilement et en toute sécurité à des contenus payants, sans avoir, par exemple, à divulguer son numéro de carte de crédit. L'accès depuis Internet à des données privées ou réservées PR de sites exclusifs SE au moyen du système décrit est complètement automatisé et ne nécessite, de la part d'un utilisateur, que de valider le chargement du composant logiciel CL en vue de son auto-installation (cette opération ne sera plus nécessaire tant que la version du composant logiciel CL chargé dans le terminal T sera celle requise par le site SE) et de formuler une demande d'accès, par exemple par un simple clic au moyen d'une souris, comme décrit à l'étape 103. Les données privées PR pourront être consultées en ligne, ce qui permet d'éviter les téléchargements souvent très longs et conduisant à une obsolescence rapide des données. Le seul téléchargement nécessaire est celui du composant logiciel CL, dont la taille pourra être limitée par exemple à environ 200 Ko, ce qui représente quelques minutes pour un terminal équipé d'un modem standard. Mais ce téléchargement ne sera nécessaire que lors du chargement initial du composant logiciel CL et des changements ultérieurs de version de celui-ci.

Le système décrit n'est pas limité à son utilisation dans le cadre d'Internet et, dans celui-ci, à des outils d'exploration ou navigation sur le Web : ce système peut également être utilisé pour des applications de transfert de fichiers (FPT), des outils de messagerie (e-mail), etc.

Il va de soi que le mode de réalisation décrit n'est qu'un exemple et l'on pourrait le modifier, notamment par substitution d'équivalents techniques, sans pour autant sortir du cadre de l'invention.

## Revendications

1. Système de traitement de données client-serveur comprenant au moins un serveur de données publiques et de données réservées, au moins un terminal client d'accès audit serveur, au moins un premier réseau de communication bidirectionnelle pour l'accès dudit terminal auxdites données publiques dudit serveur, au moins un second réseau de communication bidirectionnelle pour l'accès dudit terminal auxdites données réservées dudit serveur, et des moyens de gestion de l'accès dudit terminal audit serveur via lesdits premier et second réseaux de communication,
caractérisé en ce que lesdits moyens de gestion comprennent :
- un module d'accès auxdites données réservées dudit serveur (SE1, SE2, SE3, SE4) ledit module comprenant des moyens (104-108, 300-302) de connexion automatique dudit terminal (T) audit serveur via ledit second réseau (R2) en réponse à une demande d'accès aux données réservées (PR1, PR2, PR3, PR4) dudit serveur,
- des moyens (201,202) de détection de l'installation dudit module d'accès dans ledit terminal client (T) en réponse à la connexion dudit terminal audit serveur via ledit premier réseau (R1), et
- des moyens (104, 200-205) de chargement dudit module dans ledit terminal via ledit premier réseau (R1) en réponse à la détection d'une absence d'installation dudit module dans ledit terminal.

2. Système selon la revendication 1, caractérisé en ce que, dans le cas où ledit terminal est connecté audit premier réseau par un modem, ledit module d'accès comprend des moyens (109) de déconnexion pour déconnecter ledit terminal (T) dudit premier réseau (R1) préalablement à sa connexion audit second réseau (R2) par lesdits moyens de connexion.

3. Système selon l'une quelconque des revendications 1 et 2,
caractérisé en ce que lesdits moyens de gestion comprennent :
- des moyens (206) de validation du chargement dudit module dans ledit terminal (T) via ledit premier réseau (R1) et
- des moyens (208) d'installation automatique dudit module d'accès dans ledit terminal en réponse à ladite validation.

4. Système selon l'une quelconque des revendications 1 à 3,
caractérisé en ce que lesdites données publiques (PU1, PU2, PU3, PU4) dudit serveur comprennent des données d'identification dudit module d'accès auxdites données réservées et lesdits moyens de détection (201,202) comprennent des moyens de lecture desdites données d'identification dans ledit serveur et des moyens pour rechercher la présence desdites données d'identification dans ledit terminal (T).

5. Système selon la revendication 4, caractérisé en ce que lesdites données publiques (PU1, PU2, PU3, PU4) dudit serveur comprennent des données de localisation d'une entité contenant ledit module d'accès et lesdits moyens de chargement comprennent des moyens pour accéder à ladite entité via ledit premier réseau et pour charger dans le terminal ledit module d'accès à partir de ladite entité.

6. Système selon la revendication 5, caractérisé en ce qu'il comprend des moyens (204) de signature électronique dudit module d'accès chargé à partir de ladite entité et ledit terminal comprend des moyens (205) de vérification de ladite signature.

7. Système selon l'une quelconque des revendications 1 à 6,
caractérisé en ce que lesdits moyens (104) de connexion comprennent des moyens (300-302) pour acquérir via ledit premier réseau (R1) des paramètres de connexion dudit terminal audit serveur via ledit second réseau (R2).

8. Système selon la revendication 7, caractérisé en ce que lesdits moyens d'acquisition comprennent des moyens (300) pour extraire une clé d'accès desdites données publiques dudit serveur, des moyens pour accéder via ledit premier réseau à un serveur contenant lesdits paramètres de connexion et des moyens (302) pour charger, via ledit premier réseau (R1), lesdits paramètres dans ledit terminal à partir dudit serveur de paramètres au moyen de ladite clé d'accès.

9. Système selon la revendication 8, caractérisé en ce que lesdits paramètres de connexion sont stockés sous forme chiffrée dans ledit serveur de paramètres (301) et ledit module d'accès comprend des moyens de déchiffrage desdits paramètres.

10. Système selon l'une quelconque des revendications 1 à 9,
caractérisé en ce que ledit terminal (T) comprend un modem (M) piloté par lesdits moyens de connexion pour la connexion dudit terminal audit serveur de données via ledit second réseau (R2).

11. Système selon l'une quelconque des revendications 1 à 10,
caractérisé en ce que ledit premier réseau (R1) est le réseau Internet et ledit module d'accès est un composant logiciel adapté pour s'intégrer à un logiciel de navigation sur Internet.

12. Système selon l'une quelconque des revendications 1 à 11,
caractérisé en ce que ledit second réseau (R2) est un réseau surtaxé comprenant des moyens de taxation en fonction du temps de la connexion dudit terminal (T) audit serveur.
